# FASCICULE DE BREVET EUROPEEN

(11) **EP 3 713 391 B1**
(45) Date de publication et mention de la délivrance du brevet: **14.06.2023**
(21) Numéro de dépôt: 18803433.4
(22) Date de dépôt: 20.11.2018
(51) Int. Cl.: A01D 34/66, A01D 75/18

(54) **MACHINE AGRICOLE MUNIE D'UN SYSTEME DE SECURITE SIMPLIFIE PERMETTANT A UN OUTIL OU GROUPE D'OUTILS RELIE A UN SUPPORT D'ATTELAGE PAR UN BRAS PORTEUR D'EFFECTUER UN MOUVEMENT DE SECURITE**
LANDWIRTSCHAFTLICHE MASCHINE MIT EINEM VEREINFACHTEN SICHERHEITSSYSTEM, DAS ES EINEM WERKZEUG ODER EINER GRUPPE VON WERKZEUGEN, DIE DURCH EINEN TRAGARM MIT EINEM ANHÄNGEBOCK VERBUNDEN SIND, ERMÖGLICHT, EINE SICHERHEITSBEWEGUNG AUSZUFÜHREN
AGRICULTURAL MACHINE PROVIDED WITH A SIMPLIFIED SAFETY SYSTEM ENABLING A TOOL OR GROUP OF TOOLS CONNECTED TO A HITCHING SUPPORT BY A SUPPORT ARM TO CARRY OUT A SAFETY MOVEMENT

(30) Priorité: 21.11.2017 FR 1760994
(43) Date de publication de la demande: 30.09.2020
(73) Titulaire: Kuhn SAS, 67700 Saverne (FR)
(72) Inventeur: BILLARD, Sylvain, 67440 Reinhardsmunster (FR)
(74) Mandataire: Cabinet Nuss
(86) Numéro de dépôt international: PCT/EP2018/081910
(87) Numéro de publication internationale: WO 2019/101732

(56) Documents cités:
- EP-A1- 0 451 074
- EP-A1- 0 679 327
- WO-A1-2015/075356
- NL-C2- 1 033 509

## Description

La présente invention concerne le domaine des machines agricoles, portées, tractées ou poussées, en particulier du type glissant en appui sur le sol en utilisation normale, telles que les machines de récolte, de fauche ou de traitement des végétaux.

L'invention porte plus particulièrement sur une machine agricole du type visé ci-dessus avec un système de sécurité simplifié.

Quelle que soit leur nature exacte, les machines agricoles concernées par l'invention ont toutes pour points communs de se déplacer au travail normalement selon une direction d'avance déterminée et de comprendre :
- un support d'attelage,
- au moins un outil ou groupe d'outils présentant, en position de travail, une extension transversale à la direction d'avance et saillante latéralement par rapport au support d'attelage, ledit outil ou groupe d'outils pouvant être transféré autour d'un axe de transfert correspondant, alternativement entre la position de travail, dans laquelle il est au moins partiellement en appui sur le sol, et au moins une position soulevée, dans laquelle il est éloigné du sol,
- au moins un bras porteur qui est relié, d'une part, au support d'attelage, par l'intermédiaire d'une première articulation et d'une deuxième articulation, cette dernière étant décalée vers l'avant, dans la direction d'avance, par rapport à la première articulation, au moins en position de travail, et, d'autre part, à l'outil ou un groupe d'outils considéré au niveau d'un site d'assemblage, décalé vers l'extrémité du bras opposée aux première et deuxième articulations ou située au niveau de cette extrémité,
- un dispositif de sécurité par l'intermédiaire duquel l'outil ou le groupe d'outils considéré peut effectuer un mouvement de sécurité sous l'effet d'une pression suffisante exercée sur l'outil ou le groupe d'outils selon une direction opposée à la direction d'avance, ce mouvement de sécurité comprenant au moins une première phase de mouvement dont une composante est une rotation vers l'arrière, ce par rapport à la direction d'avance et par rapport au support d'attelage.

En effet, lors de leur utilisation, ces machines peuvent heurter une pierre, une souche ou un obstacle analogue proéminent par rapport au sol et figé dans ce dernier. Pour éviter un endommagement de l'outil ou du groupe d'outils, du support d'attelage et/ou des liaisons entre ces éléments, du fait d'un impact brutal, le dispositif de sécurité précité fait basculer de manière connue l'outil ou le groupe d'outils vers l'arrière, pour absorber le choc, compenser l'avance de la machine par rapport à l'obstacle et permettre audit outil ou groupe d'outils de disposer d'avantage de temps pour surmonter l'obstacle, en passant par-dessus par glissement ou après basculement ou soulèvement.

De nombreuses solutions sont déjà connues qui permettent de réaliser cette fonction.

Dans ces machines connues, l'axe de transfert précité permet également d'atteindre la position de transport et d'éventuelles positions intermédiaires, comme par exemple une position de passage d'andains dans le cas d'une faucheuse ou d'une faneuse.

De telles machines agricoles sont par exemple connues des documents FR 2 384 431, EP 2 926 643 et EP 2 614 697.

Une variante constructive de telles machines, dans laquelle l'axe de transfert et de dégagement vers l'arrière est un axe vertical (la position de transport étant obtenue par repliement vers l'arrière, parallèlement à la direction d'avance), est connue du document EP 0 679 327.

Dans les solutions constructives divulguées par les documents FR 2 384 431, EP 2 926 643 et EP 2 614 697, l'axe de transfert est déplacé lors de la rotation vers l'arrière soit parce qu'il est solidaire d'une pièce additionnelle pivotante par rapport au support d'attelage, soit parce que l'une des articulations dudit axe est montée mobile par rapport au support d'attelage.

Toutefois, ces solutions sont complexes, encombrantes et coûteuses du fait de la pièce additionnelle nécessaire, ou des organes actifs (vérins) supplémentaires obligatoires pour rendre mobile l'articulation concernée et assurer son maintien.

La présente invention a pour premier but de proposer, dans le contexte des machines précitées, une solution plus simple et moins encombrante pour réaliser le mouvement de sécurité. Un but additionnel est de fournir un mouvement de sécurité gradué, avec préférentiellement au moins deux phases consécutives. La solution au problème technique est apportée par l'objet de la revendication indépendante 1, définissant en soi l'invention. Des modes de réalisation préférés sont décrits dans les revendications dépendantes.

A cet effet, l'invention propose, pour une machine agricole considérée ci-dessus, que les première et deuxième articulations définissent ensemble l'axe de transfert, que ladite au moins première phase de mouvement de sécurité s'effectue autour de la première articulation ou autour de la deuxième articulation et que le dispositif de sécurité comprenne au moins un dispositif de guidage apte et destiné à autoriser une variation d'une première distance entre la deuxième articulation et le site d'assemblage, lorsque la rotation vers l'arrière s'effectue autour de la première articulation, ou une variation d'une deuxième distance entre la première articulation et le site d'assemblage, lorsque la rotation vers l'arrière s'effectue autour de la deuxième articulation.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

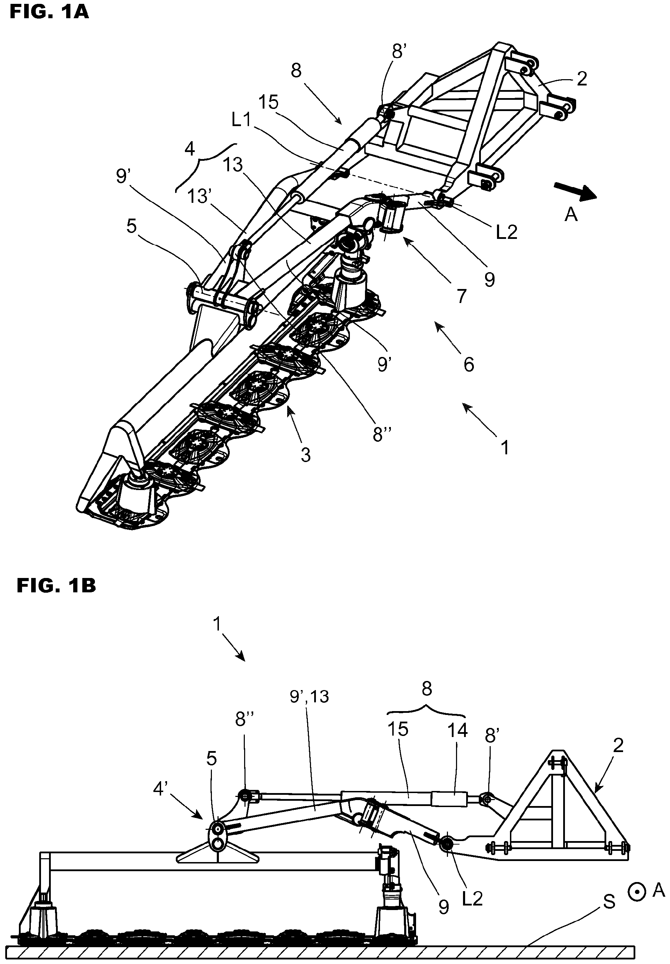

les figures 1A à 1D sont des vues, respectivement en perspective, (1A) de devant (1B), de droite (1C) et de dessus (1D), d'une machine agricole selon un premier mode de réalisation de l'invention, représentée en position normale de travail, cette machine se présentant sous la forme d'une faucheuse à disques (ni le véhicule tracteur, ni les équipements d'habillage, de capotage, de commande, d'entraînement ou autres accessoires n'étant représentés pour des raisons de clarté) ;

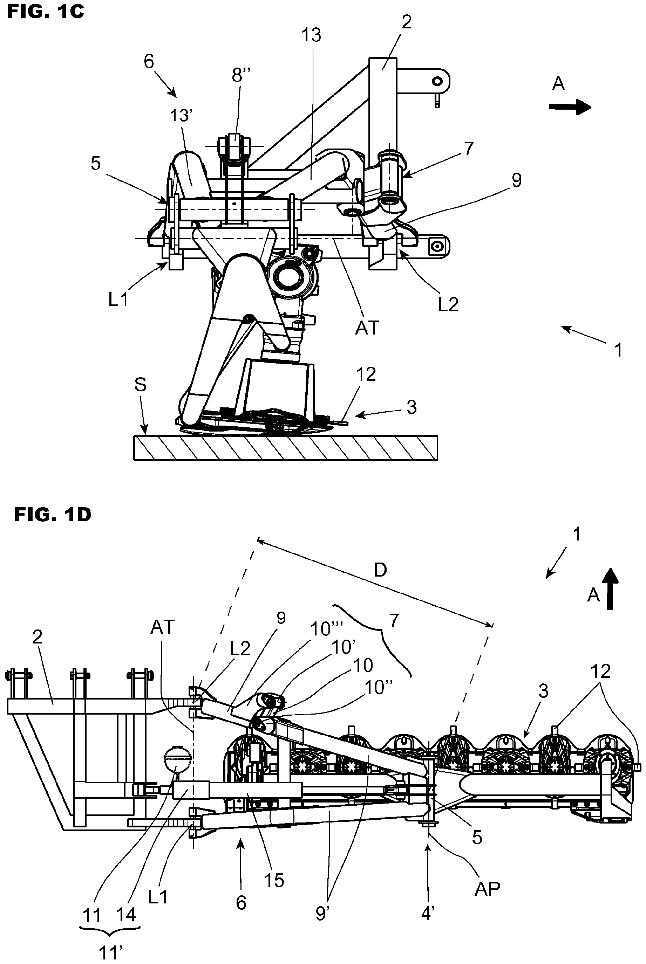

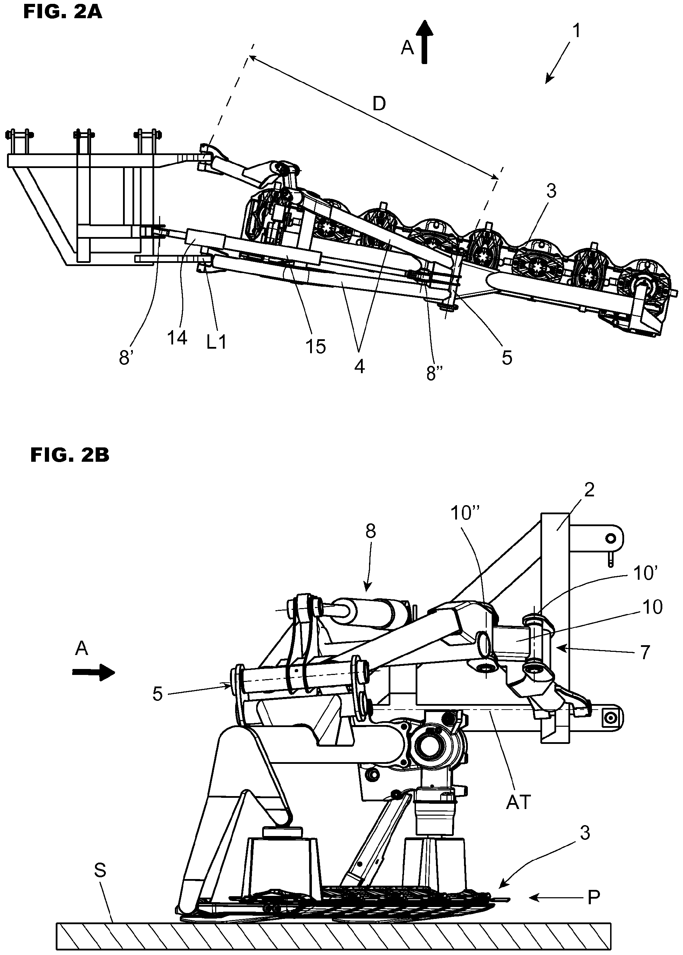

les figures 2A et 2B sont des vues, respectivement de dessus (2A) et de droite (2B), de la machine représentée sur les figures 1, dans sa configuration à la fin de la première phase du mouvement de sécurité (déplacement vers l'arrière de la barre de fauchage et annulation du piquage, par rapport à la configuration des figures 1) ;

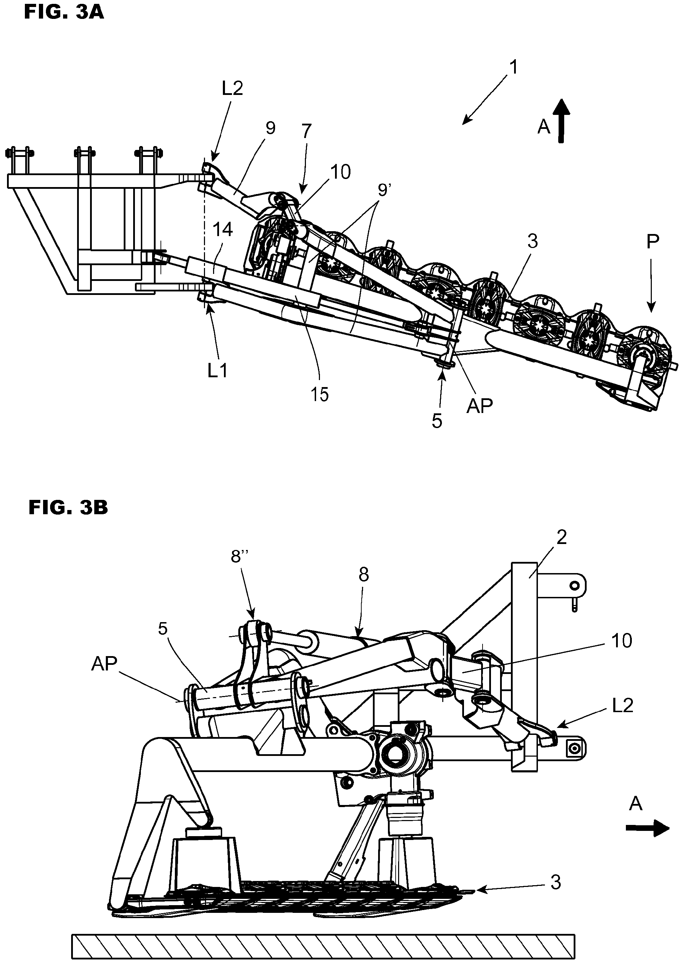

les figures 3A et 3B sont des vues, respectivement de dessus (3A) et de droite (3B), de la machine représentée sur les figures 1 et 2, dans sa configuration au cours d'une deuxième phase du mouvement de sécurité (barre de fauchage basculée vers l'arrière et éloignée du sol) ;

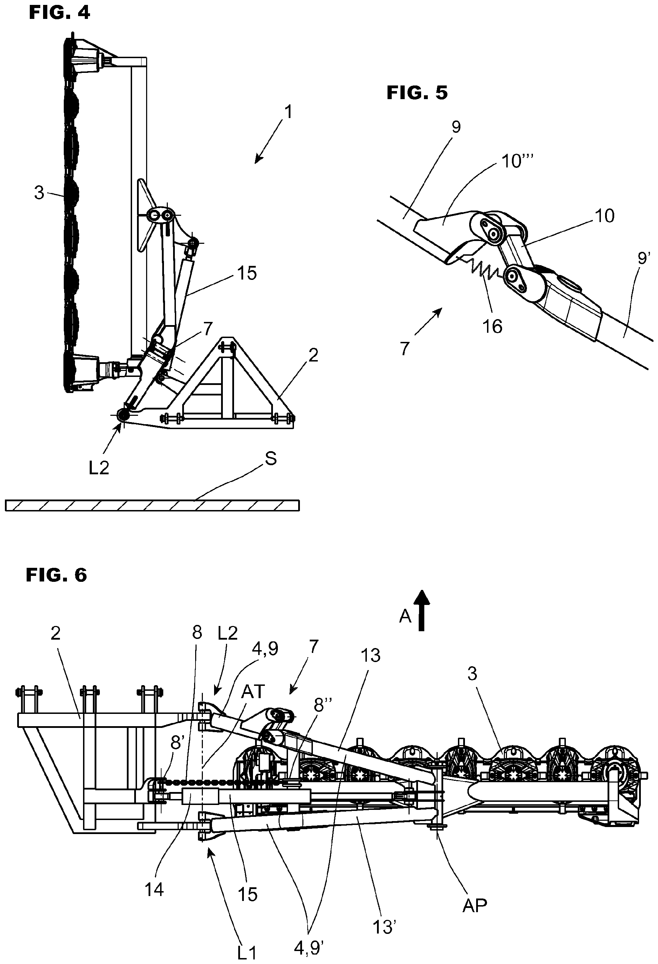

la figure 4 est une vue de devant de la machine représentée sur les figures 1 à 3, dans sa position de transport (barre de fauchage soulevée, éloignée du sol et rapprochée du support d'attelage) ;
la figure 5 est une représentation schématique de détail et en perspective d'un exemple constructif d'un dispositif de guidage faisant partie d'une machine agricole conforme au premier mode de réalisation de l'invention ;
la figure 6 est une vue de dessus d'une machine agricole selon un autre (troisième) mode de réalisation de l'invention, représentée en position normale de travail, cette machine se présentant sous la forme d'une faucheuse à disques (ni le véhicule tracteur, ni les équipements d'habillage, de capotage, de commande, d'entraînement ou autres accessoires n'étant représentés pour des raisons de clarté) ;

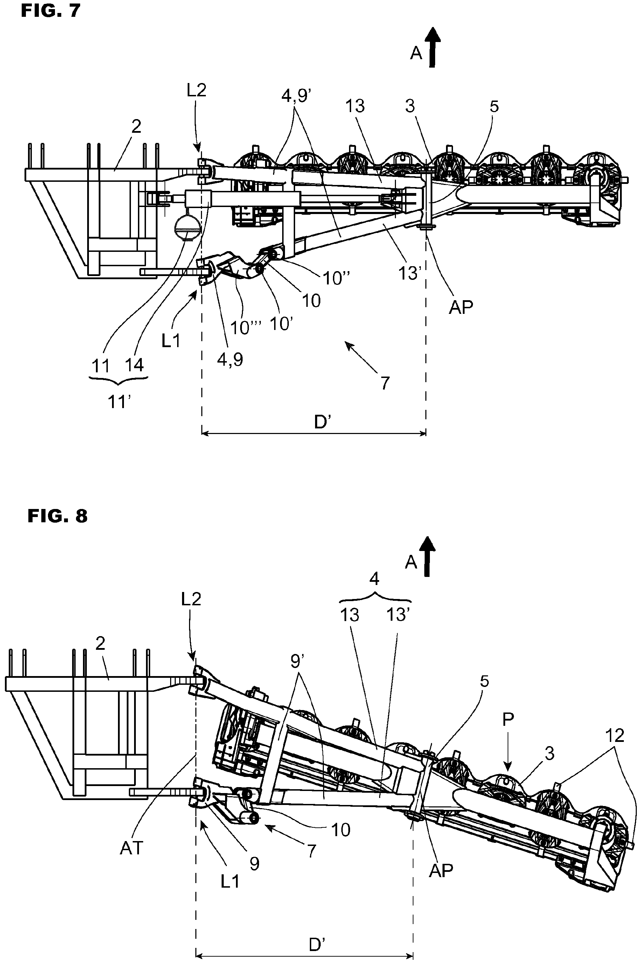

la figure 7 est une vue de dessus d'une machine agricole selon un deuxième mode de réalisation de l'invention en tant que variante constructive de celle représentée figures 1 à 4, cette machine étant représentée en position normale de travail, et se présentant sous la forme d'une faucheuse à disques (ni le véhicule tracteur, ni les équipements d'habillage, de capotage, de commande, d'entraînement ou autres accessoires n'étant représentés pour des raisons de clarté), et,
la figure 8 est une vue de dessus de la machine représentée sur la figure 7, dans sa configuration au cours d'une deuxième phase du mouvement de sécurité (barre de fauchage basculée vers l'arrière et éloignée du sol).

Les figures 1 à 8 illustrent, pour certaines très partiellement seulement, une machine agricole 1, du type porté ou tracté, se déplaçant au travail normalement selon une direction d'avance A, et comprenant :
- un support d'attelage 2,
- au moins un outil ou groupe d'outils 3 présentant, en position de travail, une extension transversale à la direction d'avance A et saillante latéralement par rapport au support d'attelage 2, ledit outil ou groupe d'outils 3 pouvant être transféré autour d'un axe AT (dit axe de transfert), alternativement entre une position de travail, dans laquelle il est au moins partiellement en appui sur le sol S, et au moins une position soulevée, dans laquelle il est éloigné du sol S,
- au moins un bras porteur 4 qui est relié, d'une part, au support d'attelage 2, par l'intermédiaire d'une première articulation L1 et d'une deuxième articulation L2, cette deuxième articulation L2 étant décalée vers l'avant, dans la direction d'avance A, par rapport à la première articulation L1, au moins en position de travail, et, d'autre part, à l'outil ou un groupe d'outils 3 considéré au niveau d'un site d'assemblage 5, décalé vers l'extrémité 4' du bras 4 opposée aux première et deuxième articulations L1 et L2 ou située au niveau de cette extrémité 4', et
- un dispositif de sécurité 6 par l'intermédiaire duquel l'outil ou le groupe d'outils 3 considéré peut effectuer un mouvement de sécurité sous l'effet d'une pression P suffisante exercée sur l'outil ou le groupe d'outils 3 selon une direction opposée à la direction d'avance A, ce mouvement de sécurité comprenant au moins une première phase de mouvement dont au moins une composante est une rotation vers l'arrière, ce par rapport à la direction d'avance A et par rapport au support d'attelage 2.

Conformément à l'invention, ladite au moins première phase de mouvement de sécurité vers l'arrière s'effectue autour de la première articulation L1 ou autour de la deuxième articulation L2 et le dispositif de sécurité 6 comprend au moins un dispositif 7 de guidage apte et destiné à autoriser une variation de la première distance D entre la deuxième articulation L2 et le site d'assemblage 5, lorsque la rotation vers l'arrière s'effectue autour de la première articulation L1 (figures 1 à 6), ou une variation de la deuxième distance D' entre la première articulation L1 et le site d'assemblage 5, lorsque la rotation vers l'arrière s'effectue autour de la deuxième articulation L2 (figures 7 et 8). Par « rotation vers l'arrière », on entend dans ce document la rotation vers l'arrière de ladite au moins première phase du mouvement de sécurité.

De plus, l'axe de transfert AT est défini par coopération mutuelle des première articulation L1 et deuxième articulation L2, c'est-à-dire que ces deux articulations définissent ensemble ledit axe AT. Il est alors fixe par rapport au support d'attelage 2. De préférence, cet axe de transfert AT est sensiblement parallèle au sol S lorsque la machine 1 est attelée.

Ainsi, l'invention fournit une solution simple pour la réalisation du mouvement de sécurité vers l'arrière de l'outil ou du groupe d'outils 3, ne nécessitant ni de pièce additionnelle (le bras porteur 4 est assemblé directement avec le support d'attelage 2), ni un quelconque déplacement de l'axe de transfert AT ou de l'une des articulations L1 ou L2 par rapport au support d'attelage 2. L'assemblage direct du bras porteur 4 avec le support d'attelage 2 est avantageusement réalisé par les première et deuxième articulations L1 et L2.

Par assemblage direct, on entend dans la présente une liaison sans pièce ou élément intermédiaire additionnel(le), en dehors des articulations L1 et L2 qui réalise ledit assemblage. On aboutit ainsi à une construction simple et robuste, avec un nombre minimum de pièces constitutives pour l'ensemble support d'attelage 2/bras porteur 4.

En accord avec une construction préférée, le dispositif 7 de guidage est intégré à la structure du bras porteur 4 et est configuré pour réaliser, lors de la rotation vers l'arrière, soit un mouvement de déploiement résultant en un allongement de la première distance D entre la deuxième articulation L2 et le site d'assemblage 5, lorsque ladite rotation s'effectue autour de la première articulation L1, soit un mouvement de repliement résultant en un raccourcissement de la deuxième distance D' entre la première articulation L1 et le site d'assemblage 5, lorsque ladite rotation s'effectue autour de la deuxième articulation L2. Le premier cas (variation de D) est illustré par les figures 1 à 6et le second cas (variation de D') est illustré sur les figures 7 et 8.

Ces dispositions permettent d'aboutir à une solution constructive présentant un encombrement minimal (le dispositif 7 de guidage fait partie intégrante du bras 4) et ne concernant que le bras porteur 4 (les autres éléments constitutifs de la machine 1 ne sont pas impactés en termes de modifications constructives pour réaliser le mouvement vers l'arrière).

On peut noter que la solution selon l'invention peut être mise en oeuvre symétriquement, et indifféremment selon l'un quelconque des deux cas précités.

Tel est notamment le cas pour les faucheuses dont l'outil ou le groupe d'outils 3 consiste en une barre de fauchage comportant des disques ou des tambours de fauche équipés d'organes de coupe 12 qui forment un angle par rapport au sol S, appelé angle de piquage, en position normale de travail (voir figures 1C et 2B).

Dans ce contexte, le dispositif 7 de guidage selon l'invention est conçu de manière à profiter de la rotation vers l'arrière de l'outil ou du groupe d'outils 3 autour de la première articulation L1 ou de la deuxième articulation L2 et par rapport au support d'attelage 2, pour contraindre l'outil ou le groupe d'outils 3 à basculer vers l'arrière autour d'un axe horizontal et transversal à la direction d'avance A.

Le support d'attelage 2 est destiné à être lié à un tracteur ou véhicule analogue non représenté (par exemple attelage trois-points).

Le site d'assemblage 5 consiste avantageusement en une troisième articulation apte à transmettre, depuis l'outil ou le groupe d'outils 3, la pression P au bras porteur 4, fournissant un accrochage pendulaire à l'outil ou au groupe d'outils 3 par rapport au bras porteur 4.

Dans un mode de réalisation préféré, le site d'assemblage 5 peut être une liaison pivot d'axe AP. Ainsi qu'il ressort des figures annexées, en position normale de travail, l'axe AP est de préférence sensiblement parallèle à la direction d'avance A. D'autre part, dans cette même position, l'axe AP est sensiblement horizontal ou parallèle au plan du sol S. Selon une construction préférée, le site d'assemblage 5 relie le bras 4 à l'outil ou au groupe d'outils 3 par le biais d'une bielle articulée au bras 4 autour d'un axe AP et articulée à l'outil ou groupe d'outils 3 autour d'une liaison pivot d'axe parallèle à l'axe AP.

La première distance D peut alors être définie comme la distance entre la première articulation L1 et un point de la droite passant par l'axe AT. La deuxième distance D', quant à elle, peut être définie comme la distance entre la deuxième articulation L2 et un point de la droite passant par l'axe AT.

Les première et deuxième articulations L1 et L2 quant à elles sont configurées, en présentant des degrés de liberté suffisants, pour autoriser les différents mouvements du bras 4 et sont du type à autoriser, d'une part, au moins une rotation limitée autour d'un axe sensiblement parallèle au plan du sol S et sensiblement parallèle à la direction d'avance A et, d'autre part, au moins une rotation limitée autour d'un axe sensiblement perpendiculaire au plan du sol S.

Préférentiellement, chacune des première et deuxième articulations L1 et L2 est une articulation à rotule.

Avantageusement, le dispositif de guidage 7 est intégré au bras porteur 4 et est configuré pour autoriser une modification de forme limitée dudit bras porteur 4.

Ainsi, la déformation guidée du dispositif 7 de guidage induite par la rotation vers l'arrière de l'outil ou du groupe d'outils 3, générée par la pression P d'un obstacle et transmise au bras porteur 4 par l'articulation 5, entraîne une déformation dudit bras 4. Cette déformation forcée et dirigée comprend avantageusement, compte tenu d'une conception et d'un arrangement particuliers dudit dispositif 7 de guidage, décrits de manière exemplaire ci-après et illustrés sur les figures annexées en plusieurs variantes non limitatives, non seulement une modification de l'une des première et deuxième distances D et D', mais également une modification sous forme de torsion avec rotation angulaire autour des axes définissant ces deux distances (axe L1-5 ou axe L2-5).

Le dispositif de sécurité 6 est apte à maintenir le dispositif 7 de guidage (donc l'outil ou le groupe d'outils 3) en position normale de travail.

En position normale de travail, aucun obstacle (susceptible d'être rencontré durant l'avance de la machine 1) n'exerce de pression P suffisante sur le bras porteur 4 ou l'outil ou le groupe d'outils 3 : le mouvement de sécurité n'est donc pas effectué.

Toutefois, en présence d'un obstacle apte à exercer une pression P suffisante, le dispositif de sécurité 6 autorise un mouvement de sécurité de l'outil ou du groupe d'outils 3 qui peut être décomposé en au moins deux phases consécutives.

La première phase comprend alors une composante de rotation par rapport au support d'attelage 2 vers l'arrière autour de la première articulation L1 ou de la deuxième articulation. La première phase comprend au moins un pivotement autour d'un axe vertical passant par la première articulation L1 ou par la deuxième articulation L2. De préférence, cette première phase comprend également un pivotement autour d'un axe horizontal ou parallèle au sol S et transversal à la direction d'avance A passant par la première articulation L1 ou par la deuxième articulation L2. Enfin, dans certaines circonstances particulières, la première phase du mouvement de sécurité peut également comprendre une composante de pivotement vers le haut autour de l'axe de transfert AT.

La deuxième phase du mouvement de sécurité autorisé par le dispositif 6 de l'outil ou du groupe d'outils 3 comprend au moins une composante de rotation autour d'un axe vertical passant par la première articulation L1 ou par la deuxième articulation L2. Préférentiellement, la deuxième phase du mouvement de sécurité de l'outil ou du groupe d'outils 3 comprend une composante de pivotement additionnel autour d'un axe passant par la première articulation L1 ou par la deuxième articulation L2.

En prévoyant un dispositif de sécurité 6 avec un dispositif 7 de guidage tel qu'évoqué précédemment, le bras porteur 4 dispose d'une possibilité de modification de forme limitée, autorisant les deux phases du mouvement de sécurité sans compromettre les fonctions premières dudit bras 4, à savoir le support, le maintien en position et le déplacement entre les différentes positions opérationnelles illustrées de l'outil ou du groupe d'outils 3.

En accord avec une construction pratique avantageuse, également apparente sur les figures annexées, le dispositif 7 de guidage est monté entre et relie mutuellement une première partie constitutive rigide 9 du bras porteur 4, reliée au support d'attelage 2 par l'une des première et deuxième articulations L1 ou L2, et une seconde partie constitutive rigide 9' de ce dernier, reliée au support d'attelage 2 par l'autre des première et deuxième articulations L1 ou L2 et comprenant le site d'assemblage 5.

Les première et seconde parties constitutives 9 et 9' forment chacune une pièce structurelle, d'un seul tenant ou assemblée, sensiblement indéformable (à l'exception des déformations sous contraintes), et donc rigide.

Un tel dispositif 7 de guidage présente l'avantage non seulement d'autoriser une variation d'au moins une des distances D ou D', mais également d'autoriser un mouvement de la première partie constitutive 9 relativement à la seconde partie constitutive 9'.

Conformément à un mode de réalisation de l'invention, ressortant des figures 1 à 8, le dispositif 7 de guidage comprend avantageusement une biellette 10 reliée à chacune des deux parties constitutives 9 et 9' du bras porteur 4. Chaque partie constitutive 9 et 9' est reliée à la biellette 10 par une liaison pivot 10', 10" respective, les axes de ces deux liaisons pivots étant parallèles entre eux. De préférence, le dispositif 7 de guidage consiste en un mécanisme dit à compas ou à genouillère. La biellette 10 peut être reliée directement ou indirectement à chacune des parties constitutives 9 et 9'.

Afin de forcer l'avant de l'outil ou du groupe d'outils 3 à basculer vers le haut et vers l'arrière, il est avantageusement prévu que les axes parallèles des deux liaisons pivots 10' et 10" soient, en position de travail de l'outil ou du groupe d'outils 3, inclinés par rapport à la verticale au sol S, en direction du support d'attelage 2.

De manière favorable, l'angle d'inclinaison par rapport à la verticale des axes de pivotement des liaisons 10', 10" est compris entre 10° et 40°, préférentiellement entre 20° et 30° environ.

Une conception du dispositif 7 de guidage telle qu'évoquée ci-dessus, c'est-à-dire avec une biellette 10, permet de guider le mouvement de sécurité grâce à un quadrilatère d'articulation 2, 9, 10, 9' intégré au bras porteur 4. Sur les figures représentées, ce quadrilatère déformable est respectivement constitué par le support d'attelage 2, la première partie constitutive 9, la biellette 10 et la seconde partie constitutive 9'. Ainsi, ce quadrilatère est avantageusement situé dans le plan contenant les articulations L1, L2 et le site d'assemblage 5 et réalise un guidage en rotation autour de L1 ou L2 lors de la première phase du mouvement de sécurité. Lors de cette rotation, ni le support d'attelage 2, ni l'une quelconque desdites articulations L1, L2 n'est déplacé.

De plus, le dispositif 7 de guidage précité présente l'avantage de pouvoir guider l'outil ou le groupe d'outils 3 lors d'un deuxième mouvement de sécurité, ce lorsque l'outil ou le groupe d'outils 3 est en position de transport. Ce deuxième mouvement de sécurité est également dirigé vers l'arrière par rapport à la direction d'avance A et par rapport au support d'attelage 2 et s'effectue autour de la première articulation L1 ou de la deuxième articulation L2.

On peut noter que le dispositif 7 de guidage comporte en plus de la biellette 10 doublement articulée en pivotement, une seconde branche 10'" rigidement solidarisée à l'une des parties constitutives 9, 9' du bras porteur 4. Par ailleurs, comme il ressort des figures, les axes des liaisons pivot 10' et 10" sont orientés perpendiculairement à l'axe AT.

Le dispositif de sécurité 6 de la machine 1 peut en outre comporter un vérin 14, spécifique (dédié) ou non, fournissant un effort résistif, d'une intensité prédéterminée, s'opposant à la rotation vers l'arrière du bras porteur 4 et de l'outil ou du groupe d'outils 3.Le vérin 14 peut ainsi également s'opposer à un déplacement relatif des parties constitutives 9 et 9'. Dans la position normale du dispositif 7 de guidage (position normale de travail de l'outil ou du groupe d'outils 3), le vérin 14 exerce ainsi un effort maintenant la première distance D à sa valeur minimale et/ou la deuxième distance D' à sa valeur maximale.

De préférence, ce vérin 14 est relié à un accumulateur de pression, tel un accumulateur 11 hydraulique ou oléopneumatique, de sorte à former ensemble un accumulateur d'énergie 11'. L'accumulateur d'énergie 11' peut cependant également être réalisé par un ressort.

Ledit vérin 14 ou accumulateur d'énergie 11' fournissant un effort résistif, d'une intensité prédéterminée, s'opposant à la rotation vers l'arrière du bras porteur 4 et de l'outil ou du groupe d'outils 3, peut être un organe spécifiquement dédié à cette fonction ou alors être constitué par un organe existant, auquel une fonction additionnelle a été confiée, du fait d'un arrangement particulier et/ou d'une constitution particulière (voir à titre d'exemple la description ci-après en relation avec le moyen de relèvement 8 et les figures 1 à 4, 7 et 8).

De manière particulièrement préférée, le bras porteur 4 présente une structure tubulaire sensiblement en forme de A, avec une branche avant 13 et une branche arrière 13' reliées rigidement entre elles, les extrémités libres desdites branches 13 et 13' étant reliées au support d'attelage 2 respectivement par les première et deuxième articulations (L1 et L2) et lesdites branches 13 et 13' étant assemblées au niveau du sommet du A, lequel comporte avantageusement le site d'assemblage 5.

La traverse 13" ou analogue reliant les deux branches 13, 13' se raccorde à la branche 13, 13' comportant le dispositif 7, au niveau de sa partie raccordée au sommet du A et non au niveau de sa partie reliée au support d'attelage 2.

Cette forme du bras porteur 4 présente l'avantage de maintenir l'outil ou le groupe d'outils 3 de manière solide et stable tout en autorisant la rotation vers l'arrière du mouvement de sécurité.

Plus précisément, la structure en A est avantageusement au moins légèrement asymétrique avec une branche arrière 13' sensiblement perpendiculaire à l'axe de transfert AT et une branche avant 13 inclinée vers l'arrière par rapport à cet axe. Ainsi, les axes de ces branches 13 et 13' forment avec l'axe de transfert AT sensiblement un triangle rectangle (projection dans un plan contenant les articulations L1, L2 et 5).

Le dispositif 7 de guidage est alors intégré dans l'une des deux branches 13 et 13' du bras porteur 4, comme le montrent les figures 1 à 8 annexées.

Conformément à une caractéristique possible de l'invention, ressortant plus particulièrement des figures 1A à 1C, D, 2C, 2D, 3A, 4A, 4B et 5B, le dispositif 7 de guidage est intégré dans une portion d'une des branches 13 ou 13', qui est inclinée par rapport à un plan défini par les deux extrémités libres et le sommet de la structure en A formée par le bras porteur 4. De la sorte, le mouvement de sécurité peut comprendre un basculement vers l'arrière de l'avant de l'outil ou du groupe d'outils 3, forçant cette partie à être éloignée du sol S (par exemple annulation d'un piquage) et facilitant ainsi avantageusement le passage d'un obstacle tout en minimisant les potentiels dommages dus à cet obstacle.

A cet effet, le bras porteur 4 peut avantageusement présenter une forme cintrée, chaque branche 13, 13' étant constituée de deux portions contiguës formant un angle obtus entre eux.

Afin de maintenir la première distance D à son allongement minimum ou la deuxième distance D' à son allongement maximum, notamment lorsque l'outil ou le groupe d'outils 3 est en position de passage d'andains, il peut être avantageusement prévu un deuxième accumulateur d'énergie 16 lié d'une part à la première partie constitutive 9, ce préférentiellement directement, et lié d'autre part la seconde partie constitutive 9', ce préférentiellement directement, de sorte à pouvoir exercer une attraction entre ces deux partie constitutives 9, 9'. De préférence le deuxième accumulateur d'énergie est un ressort de traction.

En variante alternative ou de manière additionnelle, il peut également être prévu qu'un ressort de traction 16 relie les première et seconde parties constitutives 9 et 9' du bras porteur 4, fournissant ainsi une sollicitation élastique s'opposant à un écartement mutuel desdites parties 9 et 9' et à un déploiement du dispositif 7 de guidage.

Les figures 1 à 6 illustrent un premier mode de réalisation dans lequel le dispositif 7 de guidage est intégré dans la branche avant 13 du bras porteur 4. En position normale de travail (figures 1), ce dispositif 7 de guidage est en configuration repliée et il se déplie lors du mouvement de sécurité vers l'arrière (figures 2 et 3). Dans ce premier mode de réalisation, au moins la première phase du mouvement de sécurité s'effectue autour de la première articulation L1. Dans ce mode de réalisation, en position de travail de l'outil ou du groupe d'outils 3, la distance D varie entre, d'une part, une valeur minimale correspondant à la position normale de travail de l'outil ou du groupe d'outils 3 (absence de pression P suffisante) et, d'autre part, une valeur maximale atteinte au cours de la deuxième phase du mouvement de sécurité.

Les figures 7 et 8 illustrent un deuxième mode de réalisation dans lequel le dispositif 7 de guidage est intégré dans la branche arrière 13' du bras porteur 4. En position normale de travail (figure 7) ce dispositif 7 de guidage est en configuration dépliée et il se replie lors du mouvement de sécurité vers l'arrière (figure 8). Dans ce deuxième mode de réalisation, au moins la première phase mouvement de sécurité s'effectue autour de la deuxième articulation L2. Dans ce mode de réalisation, en position de travail de l'outil ou du groupe d'outils 3, la distance D' varie entre, d'une part, une valeur maximale correspondant à la position normale de travail de l'outil ou du groupe d'outils 3 (absence de pression P suffisante) et, d'autre part, une valeur minimale atteinte au cours de la deuxième phase du mouvement de sécurité.

Lorsque l'obstacle ne peut être dépassé ou surmonté dans le cadre du mouvement de sécurité vers l'arrière (première phase), il peut être envisagé, de manière connue, de soulever l'outil ou le groupe d'outils 3 à distance du sol S pour passer par-dessus l'obstacle.

Ainsi, en accord avec une caractéristique additionnelle de l'invention, ressortant des figures 1 à 4 et figure 6, le dispositif de sécurité 6 peut comprendre également un moyen de relèvement 8 conçu et arrangé pour exercer une force dirigée vers le haut (par rapport au plan du sol) et permettant d'éloigner automatiquement et progressivement du sol S l'outil ou le groupe d'outils 3, dans une deuxième phase du mouvement de sécurité consécutive à la fin de la première phase, en cas de persistance d'une pression P suffisante (figures 3 et 8). Comme déjà indiqué précédemment, on entend par pression P suffisante que la pression P dépasse une valeur seuil. Cette pression P peut être exercée par un obstacle sur l'outil ou le groupe d'outils 3 ou sur le bras porteur 4, lorsqu'un d'eux heurte cet obstacle durant l'avance de la machine 1.

De manière avantageuse, le moyen de relèvement 8 consiste en un tirant relié, d'une part, au support d'attelage 2 au niveau d'un premier point de liaison 8', préférentiellement une articulation, situé au-dessus de et en avant par rapport à la première articulation L1 et en arrière par rapport à la deuxième articulation L2 et, d'autre part, au bras porteur 4 au niveau d'un second point de liaison 8", préférentiellement une articulation, situé entre les première et deuxième articulations L1 et L2 et le site d'assemblage 5, préférentiellement plus proche de ce dernier.

Conformément à un troisième mode de réalisation, représenté figure 6, le moyen de relèvement 8 peut être un tirant tel un câble, une chaîne ou un moyen de liaison analogue lâche, détendu ou inactif en position normale de travail, ainsi que durant la première phase du mouvement de sécurité, et apte à transmettre un effort de traction entre le bras support 4 et le support d'attelage 2 dès le début de la deuxième phase dudit mouvement, durant laquelle il est tendu et actif, et vise à éloigner l'outil ou le groupe d'outils 3 du sol S.

Il peut en outre être prévu qu'au moyen de relèvement 8 est associé un vérin additionnel, par exemple le vérin 14 ou l'accumulateur d'énergie 11', monté en parallèle, éventuellement à double effet, ledit vérin fournissant au moins un effort résistif par rapport à la rotation vers l'arrière du bras porteur 4 et de l'outil ou du groupe d'outils 3 durant la première phase du mouvement de sécurité, et étant éventuellement apte à déplacer ledit outil ou groupe d'outils 3 vers au moins une position éloignée du sol.

Conformément à un des premier ou second modes de réalisation, le moyen de relèvement 8 comprend voire correspond à ce vérin 14 ou à l'accumulateur d'énergie 11' et comporte un état butoir en allongement, préférentiellement en fin de course (figures 1 à 4, 7 et 8).

Lors de la conception de la machine 1, la construction du bras porteur 4 et le choix du moyen de relèvement 8, et le réglage de sa course (fin de course - état butoir) ou de sa longueur, déterminent les circonstances définissant le début de la deuxième phase du mouvement de sécurité. Dans la pratique, les inventeurs ont constaté qu'un angle d'inclinaison (pivotement autour de l'articulation L1) d'environ 5° à 20° (par exemple de 10°) vers l'arrière par rapport à un plan perpendiculaire à la direction d'avance A, ou à sa position normale de travail, de l'outil ou du groupe d'outils 3, constituait un bon compromis pour le choix de la fin de la première phase et le début de la deuxième phase du mouvement de sécurité.

Dans le cadre de ces premier et second modes de réalisation, le vérin 14 ou l'accumulateur d'énergie 11' peut également servir à l'allègement et/ou au passage d'andains, en particulier lorsque l'outil ou le groupe d'outils 3 est un moyen de fauchage, par exemple une barre de fauchage à disques ou tambours rotatifs. Dans ce cas, les points de liaison 8' et 8" sont préférentiellement des articulations à rotule, ou au moins articulation à rotule 8' et articulation à pivot 8".

Enfin le vérin 14 ou l'accumulateur d'énergie 11' peut être associé coaxialement et solidarisé avec un vérin de relevage 15 pour former le moyen de relevage 8. Le vérin de relevage 15 permet de transférer l'outil ou du groupe d'outils 3 entre une position de transport (figure 4) et la position de travail, et inversement. En position de transport, l'outil ou le groupe d'outils 3, par exemple une barre de fauchage, est soulevé, éloigné du sol et rapproché du support d'attelage 2.

Différentes variantes de réalisation du moyen de relèvement 8, dans un contexte de machine agricole 1 du type visé dans la présente, sont décrites plus précisément dans la demande de brevet français déposée ce jour au nom de la demanderesse et portant sur une machine agricole avec un système de sécurité à cinématique de déclenchement améliorée, et dont le contenu est intégré à la présente par référence, en particulier en ce qui concerne les variantes de réalisation du moyen 8.

Préférentiellement, l'outil ou le groupe d'outils 3 est un moyen de fauchage, par exemple une barre de fauchage à disques ou tambours rotatifs équipés d'organes de coupe 12.

## Revendications

1. Machine agricole (1), du type porté ou tracté, se déplaçant au travail normalement selon une direction d'avance (A), et comprenant :
- un support d'attelage (2),
- au moins un outil ou groupe d'outils (3) présentant, en position de travail, une extension transversale à la direction d'avance (A) et saillante latéralement par rapport au support d'attelage (2), ledit outil ou groupe d'outils (3) pouvant être transféré autour d'un axe de transfert (AT) alternativement entre la position de travail, dans laquelle il est au moins partiellement en appui sur le sol (S), et au moins une position soulevée, dans laquelle il est éloigné du sol (S),
- au moins un bras porteur (4) qui est relié, d'une part, au support d'attelage (2), par l'intermédiaire d'une première articulation (L1) et d'une deuxième articulation (L2), cette deuxième articulation (L2) étant décalée vers l'avant, dans la direction d'avance (A), par rapport à la première articulation (L1), au moins en position de travail et, d'autre part, à l'outil ou au groupe d'outils (3) considéré au niveau d'un site d'assemblage (5), décalé vers l'extrémité (4') du bras (4) opposée aux première et deuxième articulations (L1 et L2) ou située au niveau de cette extrémité (4'),
- un dispositif de sécurité (6) par l'intermédiaire duquel l'outil ou le groupe d'outils (3) considéré peut effectuer un mouvement de sécurité sous l'effet d'une pression (P) suffisante exercée sur l'outil ou le groupe d'outils (3) selon une direction opposée à la direction d'avance (A), ce mouvement de sécurité comprenant au moins une première phase de mouvement dont une composante est une rotation vers l'arrière, ce par rapport à la direction d'avance (A) et par rapport au support d'attelage (2),
machine (1)
dans laquelle ladite au moins première phase de mouvement de sécurité s'effectue autour de la première articulation (L1) ou autour de la deuxième articulation (L2) et
dans laquelle le dispositif de sécurité (6) comprend au moins un dispositif (7) de guidage apte et destiné à autoriser une variation d'une première distance (D) entre la deuxième articulation (L2) et le site d'assemblage (5), lorsque la rotation vers l'arrière s'effectue autour de la première articulation (L1), ou une variation d'une deuxième distance (D') entre la première articulation (L1) et le site d'assemblage (5), lorsque la rotation vers l'arrière s'effectue autour de la deuxième articulation (L2), machine **caractérisée**
**en ce que** les première et deuxième articulations (L1 et L2) définissent ensemble l'axe de transfert (AT).

2. Machine selon la revendication 1, **caractérisée en ce que** le bras support (4) est assemblé directement avec le support d'attelage (2) par les première et deuxième articulations (L1 et L2).

3. Machine selon l'une quelconque des revendications 1 et 2, **caractérisée en ce que** chacune des première et deuxième articulations (L1 et L2) est configurée pour autoriser, d'une part, au moins une rotation limitée autour d'un axe sensiblement parallèle au plan du sol (S) et sensiblement parallèle à la direction d'avance (A) et, d'autre part, au moins une rotation limitée autour d'un axe sensiblement perpendiculaire au plan du sol (S).

4. Machine selon l'une quelconque des revendications 1 et 3, **caractérisée en ce que** le dispositif de guidage (7) est intégré au bras porteur (4) et est configuré pour autoriser une modification de forme limitée dudit bras porteur (4).

5. Machine selon l'une quelconque des revendications 1 à 4, **caractérisée en ce que** le dispositif (7) de guidage est intégré à la structure du bras porteur (4) et est configuré pour réaliser, lors de la rotation vers l'arrière, soit un mouvement de déploiement résultant en un allongement de la première distance (D) entre la deuxième articulation (L2) et le site d'assemblage (5), lorsque ladite rotation s'effectue autour de la première articulation (L1), soit un mouvement de repliement résultant en un raccourcissement de la deuxième distance (D') entre la première articulation (L1) et le site d'assemblage (5), lorsque ladite rotation s'effectue autour de la deuxième articulation (L2).

6. Machine selon la revendication 5, **caractérisée en ce que** le dispositif (7) de guidage est conçu et arrangé pour réaliser, sous l'effet de la pression (P) d'un obstacle, une déformation forcée et dirigée du bras porteur (4), comprenant, d'une part, une modification de l'une des première et deuxième distances (D et D') et, d'autre part, une modification sous forme de torsion avec rotation angulaire autour des axes définissant ces deux distances.

7. Machine selon l'une quelconque des revendications 1 à 6, **caractérisée en ce que** le dispositif (7) de guidage est monté entre et relie mutuellement une première partie constitutive rigide (9) du bras porteur (4), reliée au support d'attelage (2) par l'une des première et deuxième articulations (L1 ou L2), et une seconde partie constitutive rigide (9') de ce dernier, reliée au support d'attelage (2) par l'autre des première et deuxième articulations (L1 ou L2) et comprenant le site d'assemblage (5).

8. Machine selon l'une quelconque des revendications 1 à 7, **caractérisée en ce que** le dispositif (7) de guidage comprend avantageusement une biellette (10) reliée à chacune des deux parties constitutives (9 et 9') du bras porteur (4) par une liaison pivot (10', 10") respective, les axes de ces deux liaisons pivots (10' et 10") étant parallèles entre eux.

9. Machine selon la revendication 8, **caractérisée en ce que** les axes parallèles des deux liaisons pivots (10'et 10") sont, en position de travail de l'outil ou du groupe d'outils (3), inclinés par rapport à la verticale au sol (S), en direction du support d'attelage (2).

10. Machine selon la revendication 9, **caractérisée en ce que** l'angle d'inclinaison par rapport à la verticale des axes de pivotement des liaisons (10', 10") est compris entre 10° et 40°, préférentiellement entre 20° et 30° environ.

11. Machine selon l'une quelconque des revendications 1 à 10, **caractérisée en ce que** le bras porteur (4) présente une structure tubulaire en forme de A, avec une branche avant (13) et une branche arrière (13') reliées rigidement entre elles, les extrémités libres desdites branches (13 et 13') étant reliées au support d'attelage (2) respectivement par les première et deuxième articulations (L1 et L2) et lesdites branches (13 et 13') étant assemblées au niveau du sommet du A, lequel comporte avantageusement le site d'assemblage (5), et **en ce que** le dispositif (7) de guidage est intégré dans l'une des deux branches (13 et 13') du bras porteur (4).

12. Machine selon l'une quelconque des revendications 1 à 11, **caractérisée en ce qu'**elle comporte un vérin (14, 15) fournissant un effort résistif, d'une intensité prédéterminée, s'opposant à la rotation vers l'arrière du bras porteur (4) et de l'outil ou du groupe d'outils (3).

13. Machine selon l'une quelconque des revendications 1 à 12, **caractérisée en ce que** le dispositif de sécurité (6) comprend également un moyen de relèvement (8) conçu et arrangé pour exercer une force dirigée vers le haut permettant d'éloigner automatiquement et progressivement du sol (S) l'outil ou le groupe d'outils (3), dans une deuxième phase du mouvement de sécurité consécutive à la fin de la première phase, en cas de persistance d'une pression (P) suffisante.

14. Machine selon l'une quelconque des revendications 1 à 13, **caractérisée en ce que** l'outil ou le groupe d'outils (3) est un moyen de fauchage, par exemple une barre de fauchage à disques ou tambours rotatifs équipés d'organes de coupe (12).

## Patentansprüche

1. Landwirtschaftliche Maschine (1) vom aufgesattelten oder gezogenen Typ, die sich bei der Arbeit normalerweise in einer Vorschubrichtung (A) bewegt, und folgendes umfasst:
- eine Kupplungsauflage (2),
- mindestens ein Werkzeug oder eine Werkzeuggruppe (3), die in der Arbeitsstellung eine quer zur Vorschubrichtung (A) verlaufende und seitlich über die Kupplungsauflage (2) hinausragende Verlängerung aufweist, wobei das Werkzeug oder die Werkzeuggruppe (3) um eine Übertragungsachse (AT) abwechselnd zwischen der Arbeitsstellung, in der es oder sie zumindest teilweise auf dem Boden (S) aufliegt, und mindestens einer angehobenen Stellung, in der es oder sie vom Boden (S) entfernt ist, übertragen werden kann,
- mindestens einen Stützarm (4), der einerseits über ein erstes Gelenk (L1) und ein zweites Gelenk (L2) mit der Kupplungsauflage (2) verbunden ist, wobei dieses zweite Gelenk (L2) gegenüber dem ersten Gelenk (L1) in Vorschubrichtung (A) nach vorne versetzt ist, zumindest in Arbeitsstellung, und andererseits mit dem betreffenden Werkzeug oder der betreffenden Werkzeuggruppe (3) an einem Zusammenbaupunkt (5), der in Richtung des Endes (4') des Arms (4), das dem ersten und dem zweiten Gelenk (L1und L2) gegenüberliegt oder sich an diesem Ende (4') befindet, versetzt ist,
- eine Sicherheitsvorrichtung (6), über die das betreffende Werkzeug oder die betreffende Werkzeuggruppe (3) unter ausreichendem Druck (P) auf das Werkzeug oder die Werkzeuggruppe (3) eine Sicherheitsbewegung in einer Richtung entgegengesetzt zur Vorschubrichtung (A) ausführen kann, wobei diese Sicherheitsbewegung mindestens eine erste Bewegungsphase umfasst, deren eine Komponente eine Rückwärtsdrehung ist, und zwar in Bezug auf die Vorschubrichtung (A) und in Bezug auf die Kupplungsauflage (2),
Maschine (1),
bei der die mindestens eine erste Sicherheitsbewegungsphase um das erste Gelenk (L1) oder um das zweite Gelenk (L2) erfolgt, und
bei der die Sicherheitsvorrichtung (6) mindestens eine Führungsvorrichtung (7) umfasst, die geeignet und dazu bestimmt ist, eine Veränderung eines ersten Abstands (D) zwischen dem zweiten Gelenk (L2) und dem Zusammenbaupunkt (5) zuzulassen, wenn die Rückwärtsdrehung um das erste Gelenk (L1) herum erfolgt, oder eine Veränderung eines zweiten Abstands (D') zwischen dem ersten Gelenk (L1) und dem Zusammenbaupunkt (5), wenn die Rückwärtsdrehung um das zweite Gelenk (L2) herum erfolgt,
Maschine **dadurch gekennzeichnet, dass** das erste und das zweite Gelenk (L1 und L2) zusammen die Übertragungsachse (AT) definieren.

2. Maschine nach Anspruch 1, **dadurch gekennzeichnet, dass** der Stützarm (4) über das erste und zweite Gelenk (L1 und L2) direkt mit der Kupplungsauflage (2) zusammengesetzt ist.

3. Maschine nach irgendeinem der Ansprüche 1 und 2, **dadurch gekennzeichnet, dass** jedes der ersten und zweiten Gelenke (L1 und L2) so konfiguriert ist, dass es einerseits mindestens eine begrenzte Drehung um eine Achse zulässt, die im Wesentlichen parallel zur Bodenebene (S) und im Wesentlichen parallel zur Vorschubrichtung (A) verläuft, und andererseits mindestens eine begrenzte Drehung um eine Achse, die im Wesentlichen senkrecht zur Bodenebene (S) verläuft.

4. Maschine nach irgendeinem der Ansprüche 1 und 3, **dadurch gekennzeichnet, dass** die Führungsvorrichtung (7) in den Stützarm (4) integriert ist und so konfiguriert ist, dass sie eine begrenzte Formänderung des Stützarms (4) zulässt.

5. Maschine nach irgendeinem der Ansprüche 1 bis 4, **dadurch gekennzeichnet, dass** die Führungsvorrichtung (7) in die Struktur des Stützarms (4) integriert ist und so konfiguriert ist, dass sie bei der Rückwärtsdrehung entweder eine Entfaltungsbewegung ausführt, die zu einer Verlängerung des ersten Abstands (D) zwischen dem zweiten Gelenk (L2) und dem Zusammenbaupunkt (5) führt, wenn die Drehung um das erste Gelenk (L1) erfolgt, oder eine Faltbewegung, die zu einer Verkürzung des zweiten Abstands (D') zwischen dem ersten Gelenk (L1) und dem Zusammenbaupunkt (5) führt, wenn die Drehung um das zweite Gelenk (L2) erfolgt.

6. Maschine nach Anspruch 5, **dadurch gekennzeichnet, dass** die Führungsvorrichtung (7) so konzipiert und angeordnet ist, dass sie unter der Wirkung des Drucks (P) eines Hindernisses eine erzwungene und gerichtete Verformung des Stützarms (4) bewirkt, die einerseits eine Änderung eines der ersten und zweiten Abstände (D und D') und andererseits eine Änderung in Form einer Torsion mit Winkeldrehung um die Achsen, die diese beiden Abstände definieren, umfasst.

7. Maschine nach irgendeinem der Ansprüche 1 bis 6, **dadurch gekennzeichnet, dass** die Führungsvorrichtung (7) zwischen einem ersten starren Bestandteil (9) des Stützarms (4), der mit der Kupplungsauflage (2) durch eines der ersten und zweiten Gelenke (L1 oder L2) verbunden ist, und einem zweiten starren Bestandteil (9') des Letzteren, der mit der Kupplungsauflage (2) durch das andere der ersten und zweiten Gelenke (L1 oder L2) verbunden ist und den Zusammenbaupunkt (5) umfasst, montiert ist und diese miteinander verbindet.

8. Maschine nach irgendeinem der Ansprüche 1 bis 7, **dadurch gekennzeichnet, dass** die Führungsvorrichtung (7) vorteilhafterweise eine Lenkstange (10) umfasst, die mit jedem der beiden Bestandteile (9 und 9') des Stützarms (4) über ein jeweiliges Drehgelenk (10', 10") verbunden ist, wobei die Achsen dieser beiden Drehgelenke (10' und 10") parallel zueinander sind.

9. Maschine nach Anspruch 8, **dadurch gekennzeichnet, dass** die parallelen Achsen der beiden Drehgelenke (10' und 10") in der Arbeitsstellung des Werkzeugs oder der Werkzeuggruppe (3) gegenüber der Bodensenkrechten (S) in Richtung der Kupplungsauflage (2) geneigt sind.

10. Maschine nach Anspruch 9, **dadurch gekennzeichnet, dass** der Neigungswinkel der Schwenkachsen der Drehgelenke (10', 10") in Bezug auf die Vertikale zwischen 10° und 40°, vorzugsweise etwa zwischen 20° und 30° liegt.

11. Maschine nach irgendeinem der Ansprüche 1 bis 10, **dadurch gekennzeichnet, dass** der Stützarm (4) eine A-förmige Rohrstruktur aufweist, mit einem Vorderschenkel (13) und einem Hinterschenkel (13`), die starr miteinander verbunden sind, wobei die freien Enden der Schenkel (13 und 13') jeweils über das erste und zweite Gelenk (L1 und L2) mit der Kupplungsauflage (2) verbunden sind und die Schenkel (13 und 13') an der Spitze des A zusammengefügt sind, die vorteilhafterweise den Zusammenbaupunkt (5) umfasst, und dadurch, dass die Führungsvorrichtung (7) in einen der beiden Schenkel (13 und 13') des Stützarms (4) integriert ist.

12. Maschine nach irgendeinem der Ansprüche 1 bis 11, **dadurch gekennzeichnet, dass** sie einen Zylinder (14, 15) aufweist, der eine Widerstandskraft mit einer vorbestimmten Stärke leistet, die der Rückwärtsdrehung des Stützarms (4) und des Werkzeugs oder der Werkzeuggruppe (3) entgegenwirkt.

13. Maschine nach irgendeinem der Ansprüche 1 bis 12, **dadurch gekennzeichnet, dass** die Sicherheitsvorrichtung (6) auch ein Hebemittel (8) umfasst, das so konzipiert und angeordnet ist, dass es eine Kraft ausübt, die nach oben gerichtet ist und es ermöglicht, das Werkzeug oder die Werkzeuggruppe (3) in einer zweiten Sicherheitsbewegungsphase, die sich an das Ende der ersten Phase anschließt, bei Fortbestehen eines ausreichenden Drucks (P) automatisch und schrittweise vom Boden (S) zu entfernen.

14. Maschine nach irgendeinem der Ansprüche 1 bis 13, **dadurch gekennzeichnet, dass** das Werkzeug oder die Werkzeuggruppe (3) ein Mähwerk ist, z. B. ein Mähbalken mit rotierenden Scheiben oder Trommeln, die mit Mähelementen (12) ausgestattet sind.

## Claims

1. Agricultural machine (1) of the mounted or drawn type, moving during work normally in a direction of forward travel (A), and comprising:
- a hitching support (2),
- at least one tool or group of tools (3) having, in the work position, an extension transverse to the direction of forward travel (A) and projecting laterally with respect to the hitching support (2), the said tool or group of tools (3) being able to be transferred about a transfer axis (AT) alternately between the work position, in which it bears at least partially on the ground (S), and at least one raised position, in which it is distant from the ground (S),
- at least one mounting arm (4) which is connected, on the one hand, to the hitching support (2), via a first articulation (L1) and a second articulation (L2), this second articulation (L2) being offset forward, in the direction of forward travel (A), with respect to the first articulation (L1), at least in the work position and, on the other hand, to the tool or group of tools (3) considered at an assembly site (5) that is offset toward the opposite end (4') of the arm (4) to the first and second articulations (L1 and L2) or situated at that end (4'),
- a safety device (6) by means of which the tool or the group of tools (3) considered can perform a safety movement under the effect of sufficient pressure (P) exerted on the tool or the group of tools (3) in an opposite direction to the direction of forward travel (A), this safety movement comprising at least a first phase of movement of which one component is a rearward rotation, this being with respect to the direction of forward travel (A) and with respect to the hitching support (2),
machine (1)
in which the said at least first safety movement phase takes place about the first articulation (L1) or about the second articulation (L2), and
in which the safety device (6) comprises at least one guide device (7) able and intended to allow a variation in a first distance (D) between the second articulation (L2) and the assembly site (5) when the rearward rotation takes place about the first articulation (L1), or a variation in a second distance (D') between the first articulation (L1) and the assembly site (5) when the rearward rotation takes place about the second articulation (L2)
machine **characterized in that** the first and second articulations (L1and L2) together define the transfer axis (AT).

2. Machine according to claim 1, **characterized in that** the support arm (4) is assembled directly with the hitching support (2) via the first and second articulations (L1 and L2).

3. Machine according to any one of claims 1 and 2, **characterized in that** each of the first and second articulations (L1 and L2) is configured to allow, on the one hand, at least a limited rotation about an axis substantially parallel to the plane of the ground (S) and substantially parallel to the direction of forward travel (A) and, on the other hand, at least a limited rotation about an axis substantially perpendicular to the plane of the ground (S).

4. Machine according to any one of claims 1 and 3, **characterized in that** the guide device (7) is incorporated into the mounting arm (4) and is configured to allow the said mounting arm (4) a limited change in shape.

5. Machine according to any one of claims 1 to 4, **characterized in that** the guide device (7) is incorporated into the structure of the mounting arm (4) and is configured to perform, during the rearward rotation, either a deployment movement resulting in a lengthening of the first distance (D) between the second articulation (L2) and the assembly site (5), when the said rotation takes place about the first articulation (L1), or a folding movement resulting in a shortening of the second distance (D') between the first articulation (L1) and the assembly site (5), when the said rotation takes place about the second articulation (L2).

6. Machine according to claim 5, **characterized in that** the guide device (7) is designed and arranged to perform, under the effect of the pressure (P) of an obstacle, a forced and directed deformation of the mounting arm (4) comprising, on the one hand, a change to one of the first and second distances (D and D') and, on the other hand, a change in the form of a torsion with angular rotation about the axes defining these two distances.

7. Machine according to any one of claims 1 to 6, **characterized in that** the guide device (7) is mounted between and connects to one another a first rigid constituent part (9) of the mounting arm (4), which is connected to the hitching support (2) by one of the first and second articulations (L1 or L2), and a second rigid constituent part (9') thereof, which is connected to the hitching support (2) by the other of the first and second articulations (L1 or L2) and comprising the assembly site (5).

8. Machine according to any one of claims 1 to 7, **characterized in that** the guide device (7) advantageously comprises a link (10) connected to each of the two constituent parts (9 and 9') of the mounting arm (4) by a respective pivot connection (10', 10"), the axes of these two pivot connections (10' and 10") being mutually parallel.

9. Machine according to claim 8, **characterized in that** the parallel axes of the two pivot connections (10' and 10") are, when the tool or group of tools (3) is in the work position, inclined with respect to the vertical to the ground (S), in the direction of the hitching support (2).

10. Machine according to claim 9, **characterized in that** the angle of inclination with respect to the vertical of the axes of pivoting of the pivot connections (10', 10") is comprised between 10° and 40°, and preferably between 20° and 30° approximately.

11. Machine according to any one of claims 1 to 10, **characterized in that** the mounting arm (4) has an A-shaped tubular structure with a front branch (13) and a rear branch (13') which are rigidly connected to one another, the free ends of the said branches (13 and 13') being connected to the hitching support (2) by the first and second articulations (L1 and L2) respectively, and the said branches (13 and 13') being assembled at the vertex of the A, which advantageously comprises the assembly site (5), and **in that** the guide device (7) is integrated into one of the two branches (13 and 13') of the mounting arm (4).

12. Machine according to any one of claims 1 to 11, **characterized in that** it comprises a cylinder (14, 15) supplying a resistive force, of predetermined intensity, opposing the rearward rotation of the support arm (4) and of the tool or group of tools (3).

13. Machine according to any one of claims 1 to 12, **characterized in that** the safety device (6) also comprises a lifting means (8) designed and arranged to exert an upwardly directed force allowing the tool or the group of tools (3) to be moved automatically and progressively away from the ground (S) in a second phase of the safety movement that is consecutive to the end of the first phase, should sufficient pressure (P) persist.

14. Machine according to any one of claims 1 to 13, **characterized in that** the tool or group of tools (3) is a mowing means, for example a cutterbar with rotary disks or drums fitted with cutting members (12).
